# EUROPEAN PATENT APPLICATION

(11) **EP 2 720 441 A1**
(43) Date of publication of application: **16.04.2014**
(21) Application number: 12797321.2
(22) Date of filing: 08.06.2012
(51) Int. Cl.: H04M 1/00, H04M 1/725

(54) **PORTABLE TERMINAL, CONTROL METHOD, AND PROGRAM**

(30) Priority: 10.06.2011 JP 2011129926
(71) Applicant: NEC CASIO Mobile Communications, Ltd., Kawasaki-shi Kanagawa 211-8666 (JP)
(72) Inventor: SUGIHARA Mitsuaki, Kawasaki-shi Kanagawa 211-8666 (JP)
(74) Representative: Vossius & Partner
(86) International application number: PCT/JP2012/064749
(87) International publication number: WO 2012/169606

(57) **Abstract**

A portable terminal includes: an opening and closing portion that opens and closes; an open and close detecting unit that detects open and close of the opening and closing portion; a first processing unit that executes a first process while the open and close detecting unit is detecting that the opening and closing portion is open; and a second processing unit that executes a second process when the open and close detecting unit detects that the opening and closing portion has been closed, and the second process is a process with respect to an execution result of the first process.

## Description

### TECHNICAL FIELD

The present invention relates to a portable terminal having an opening and closing portion that can be opened and closed, a control method for the portable terminal, and a program for the portable terminal.

### BACKGROUND ART

Recently, a portable terminal having an opening and closing portion that can be opened and closed has been in widespread use. For example, Patent Documents 1 and 2 disclose a portable terminal having a first case provided with a touch panel, a second case arranged in an overlapped state on the first case and provided with an operating unit, and an opening and closing portion that movably (slidably) support the first and second cases relative to each other (hereinafter, referred to as "sliding portable terminal"). In the sliding portable terminal, a surface opposite to the touch panel of the first case faces a surface on the operating unit side of the second case, and the cases are supported by the opening and closing portion. By expanding (opening) both cases, the operating unit is exposed, and by sliding (closing) the first case toward the second case side, the operating unit can be housed.

Patent Document 1 discloses a technique that changes the display on the touch panel according to opening and closing of the sliding portable terminal.

Patent Document 2 discloses a technique that prevents malfunction at the time of opening and closing, by canceling a touch input when the touch panel is touched at the time of opening and closing in the sliding portable terminal.

### [Prior Art Documents]

### [Patent Documents]

[Patent Document 1] Japanese Unexamined Patent Application, First Publication No. 2009-230765
[Patent Document 2] Japanese Unexamined Patent Application, First Publication No. 2010-103879

### SUMMARY OF THE INVENTION

### Problem to be Solved by the Invention

Generally, when a user opens a sliding portable terminal, the user performs an operation using an operating unit. On the other hand, when the user closes the sliding portable terminal, the user finishes the operation using the operating unit. However, in the above-described sliding portable terminal, the user needs to input start or finish of a predetermined operation by an operation of a touch panel or the operating unit regardless of opening and closing of the sliding portable terminal, thereby causing a problem in that the operation is cumbersome.

The present invention has been conceived in view of the above problem. An exemplary object of the present invention is to provide a portable terminal in which processing is executed in conjunction with opening and closing.

### Means for Solving the Problem

The present invention has been conceived in order to solve the above problem. A portable terminal according to the present invention includes: an opening and closing portion that opens and closes; an open and close detecting unit that detects open and close of the opening and closing portion; a first processing unit that executes a first process while the open and close detecting unit is detecting that the opening and closing portion is open; and a second processing unit that executes a second process when the open and close detecting unit detects that the opening and closing portion has been closed, and the second process is a process with respect to an execution result of the first process.

A control method according to the present invention for a portable terminal including an opening and closing portion that opens and closes, includes: detecting open and close of the opening and closing portion; executing a first process while the opening and closing portion is open is being detected; and executing a second process when the opening and closing portion has been closed is detected, and the second process is a process with respect to an execution result of the first process.

A program according to the present invention causes a portable terminal including an opening and closing portion that opens and closes to function as: an open and close detecting unit that detects open and close of the opening and closing portion; a first processing unit that executes a first process while the open and close detecting unit is detecting that the opening and closing portion is open; and a second processing unit that executes a second process when the open and close detecting unit detects that the opening and closing portion has been closed, and the second process is a process with respect to an execution result of the first process.

### Effect of the Invention

According to the present invention, the portable terminal executes the process with respect to the execution result of a previous process in conjunction with opening or closing.

### BRIEF DESCRIPTION OF THE DRAWINGS

FIG. 1A is an outline view of a front surface of a portable terminal according to a first exemplary embodiment of the present invention.
FIG. 1B is an outline view of a side surface of the portable terminal according to the first exemplary embodiment of the present invention.
FIG. 2 is a schematic block diagram showing the configuration of the portable terminal according to the first exemplary embodiment of the present invention.
FIG. 3 is a first flowchart showing an operation of the portable terminal according to the first exemplary embodiment of the present invention.
FIG. 4 is a second flowchart showing the operation of the portable terminal according to the first exemplary embodiment of the present invention.
FIG. 5 is a diagram showing a change of a screen of the portable terminal in each process in the first exemplary embodiment of the present invention.
FIG. 6 is a schematic block diagram showing the configuration of a portable terminal according to a second exemplary embodiment of the present invention.
FIG. 7 is a flowchart showing an operation of the portable terminal according to the second exemplary embodiment of the present invention.
FIG. 8 is a schematic block diagram showing the configuration of a portable terminal according to a third exemplary embodiment of the present invention.
FIG. 9 is a flowchart showing an operation of the portable terminal according to the third exemplary embodiment of the present invention.

### EMBODIMENTS FOR CARRYING OUT THE INVENTION

### (First Exemplary Embodiment)

Hereunder is a detailed description of exemplary embodiments of the present invention, with reference to the drawings.

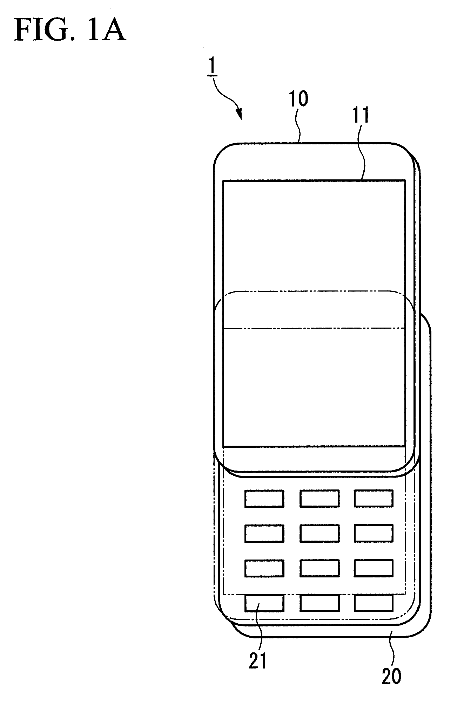

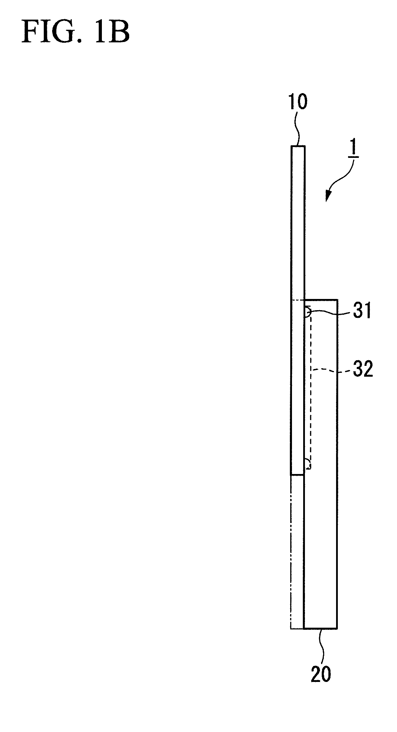

FIG. 1A is an outline view of a front surface of a portable terminal 1 according to a first exemplary embodiment of the present invention. FIG. 1B is an outline view of a side surface of the portable terminal 1 according to the first exemplary embodiment of the present invention.

The portable terminal 1 includes a first case 10 and a second case 20.

A touch panel 11 is provided on one surface of the first case 10. Hereinafter, the surface provided with the touch panel 11 of the first case 10 is referred to as a front surface. A surface opposite to the front surface of the first case 10 is referred to as a back surface. The touch panel 11 is an input device including a display unit such as an LCD (Liquid Crystal Display) and an input unit that receives an input from a user by contact by the user.

An operating unit 21 is provided on one surface of the second case 20. Hereinafter, the surface provided with the operating unit 21 of the second case 20 is referred to as a front surface. A surface opposite to the front surface of the second case 20 is referred to as a back surface. The operating unit 21 includes a plurality of buttons, and receives an input from the user when the button is pressed.

An opening and closing portion that movably supports the first case 10 and the second case 20 relative to each other, is provided on the back surface of the first case 10 and the front surface of the second case 20. For example, as shown in FIG. 1B, a protrusion 31 provided on the back surface of the first case 10 and a groove 32 provided on the front surface of the second case 20 and fitted to the protrusion 31 may form the opening and closing portion. In this case, the protrusion 31 moves along the groove 32 to move the first case 10 and the second case 20 relative to each other. By expanding the first case 10 and the second case 20, the operating unit 21 is exposed. The operating unit 21 can be housed by sliding the first case 10 toward the second case 20 side. That is, by sliding the first case 10 with respect to the second case 20 along a longitudinal direction of the portable terminal 1 so that an upper end of the first case 10 of the portable terminal approaches a lower end of the second case 20, the operating unit 21 is covered by the first case 10. Hereinafter, a state in which the operating unit 21 is exposed in the portable terminal 1 is referred to as open state (opened state). Moreover, a state in which the operating unit 21 is housed is referred to as close state (closed state).

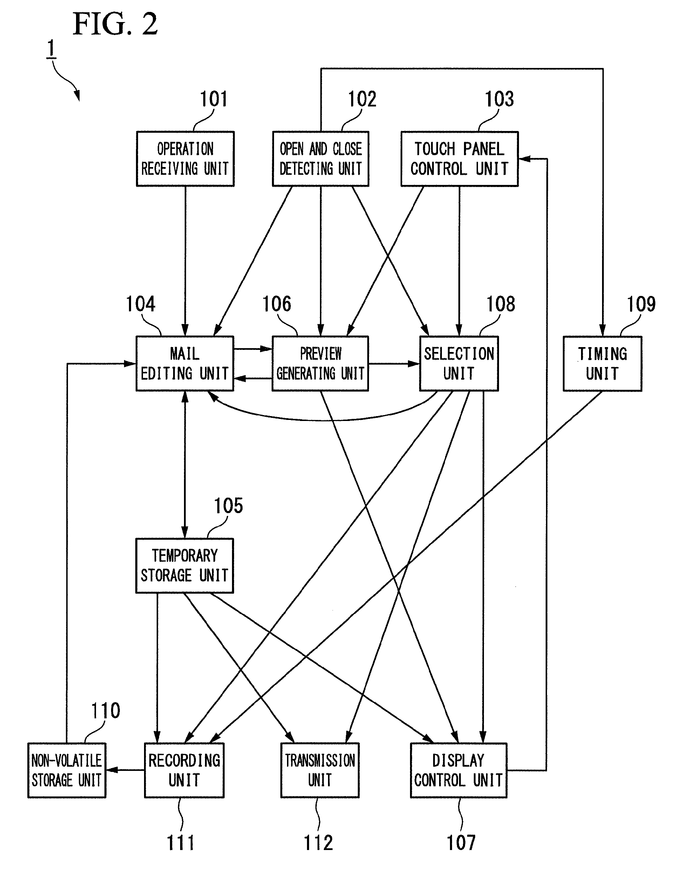

FIG. 2 is a schematic block diagram showing the configuration of the portable terminal 1 according to the first exemplary embodiment of the present invention.

The portable terminal 1 includes an operation receiving unit 101, an open and close detecting unit 102, a touch panel control unit 103, a mail editing unit 104 (first processing unit), a temporary storage unit 105, a preview generating unit 106 (second processing unit), a display control unit 107, a selection unit 108, a timing unit 109, a non-volatile storage unit 110, a recording unit 111 (third processing unit, fourth processing unit), and a transmission unit 112 (third processing unit).

The operation receiving unit 101 receives an input from a user with respect to the operating unit 21 provided in the first case 10 and generates an input signal corresponding to the input.

The open and close detecting unit 102 determines whether the opening and closing portion is in an open state or in a close state. Specifically, a magnetic sensor is provided in the first case 10. A magnet is provided in the second case 20 at a position close to the magnetic sensor in the first case 10 in the close state. The open and close detecting unit 102 determines opening or closing of the opening and closing portion by determining whether the magnetic sensor in the first case 10 has approached the magnet in the second case 20.

The touch panel control unit 103 receives a touch input to the touch panel 11 and generates an input signal corresponding to the input. The touch panel control unit 103 displays information on the touch panel 11.

The mail editing unit 104 receives an input signal from the operation receiving unit 101 when the portable terminal 1 is in the open state, generates a mail document corresponding to the input signal, and records the mail document in the temporary storage unit 105 (first process). When a mail document has been recorded in the non-volatile storage unit 110, the mail editing unit 104 reads the mail document to rewrite the mail document.

The temporary storage unit 105 is a volatile memory, and stores a mail document generated by the mail editing unit 104.

When the portable terminal 1 has shifted from the open state to the close state, the preview generating unit 106 instructs the display control unit 107 to generate a preview screen of the mail document stored in the temporary storage unit 105 (second process).

Upon reception of a generation instruction of the preview screen from the preview generating unit 106, the display control unit 107 generates a preview screen from the mail document stored in the temporary storage unit 105, and outputs the preview screen to the touch panel control unit 103. Moreover, upon reception of a generation instruction of a selection screen from the selection unit 108, the display control unit 107 generates a selection screen, and outputs the selection screen to the touch panel control unit 103.

When the touch panel control unit 103 receives an input while the preview screen is displayed on the touch panel 11, the selection unit 108 receives a selection of whether to save, send, or delete the mail document from the user.

The timing unit 109 times elapsed time from the time at which the portable terminal 1 has shifted from the open state to the close state.

The non-volatile storage unit 110 stores information input by the user in a non-volatile manner.

The recording unit 111 records the mail document stored in the temporary storage unit 105 in the non-volatile storage unit 110 according to an instruction from the selection unit 108 (third process). When the elapsed time timed by the timing unit 109 has reached a predetermined time, the recording unit 111 records the mail document stored in the temporary storage unit 105 in the non-volatile storage unit 110 (fourth process).

The transmission unit 112 sends the mail document stored in the temporary storage unit 105 according to an instruction from the selection unit 108 (third process).

Next is a description of the operation of the portable terminal 1.

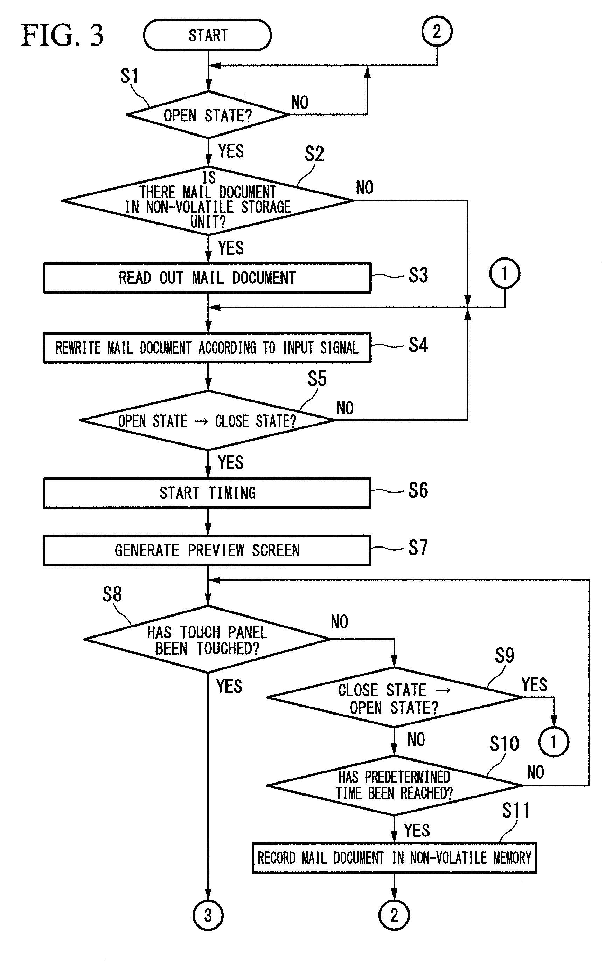

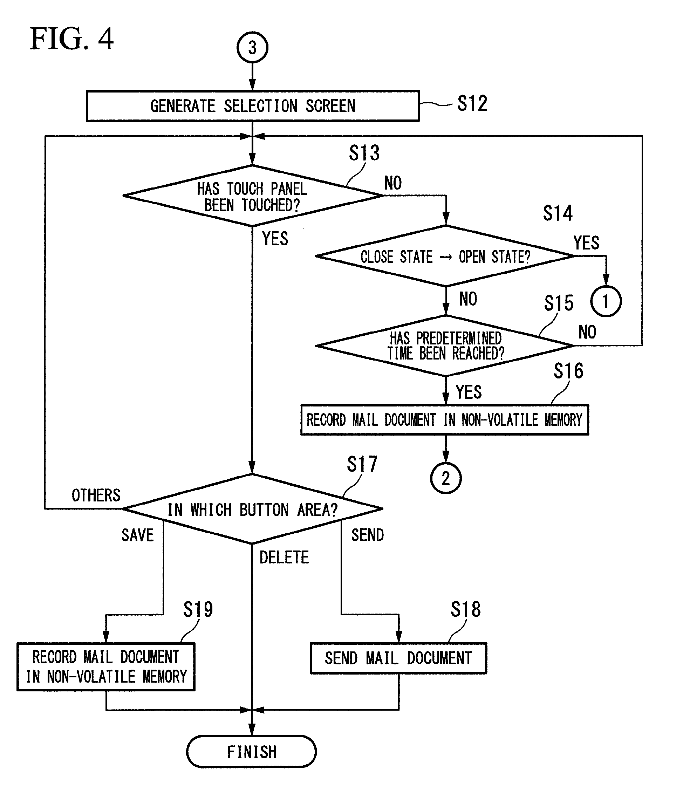

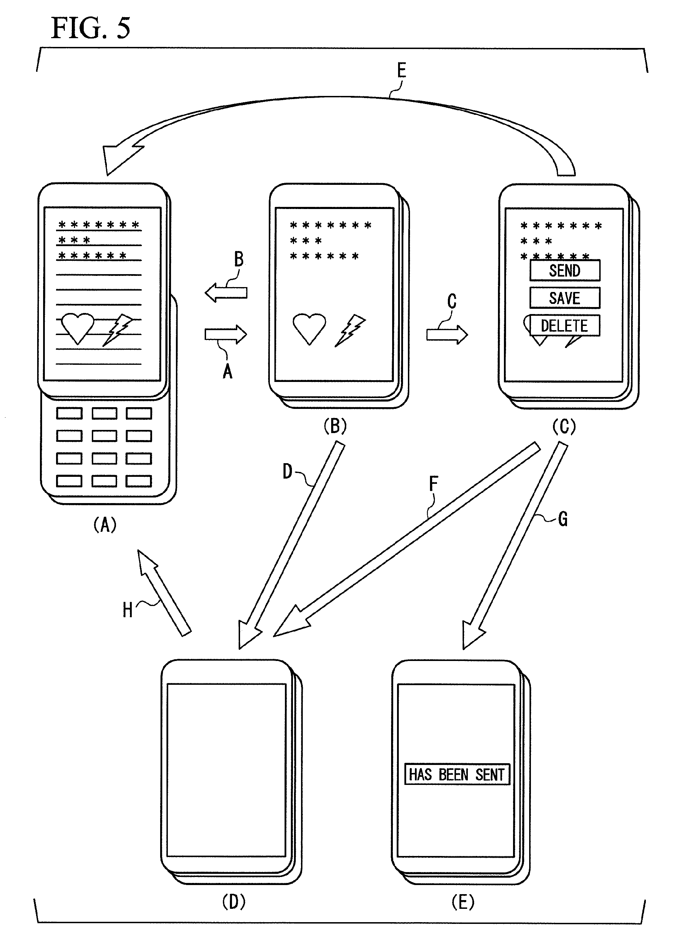

FIG. 3 is a first flowchart of the operation of the portable terminal 1 according to the first exemplary embodiment of the present invention. FIG. 4 is a second flowchart of the operation of the portable terminal 1 according to the first exemplary embodiment of the present invention. FIG. 5 is a diagram that shows changes of a screen of the portable terminal 1 in each process.

Portion (A) of FIG. 5 shows an editing screen of the portable terminal 1. Portion (B) of FIG. 5 shows a preview screen of the portable terminal 1. Portion (C) of FIG. 5 shows a selection screen of the portable terminal 1. Portion (D) of FIG. 5 shows a standby screen. Portion (E) of FIG. 5 shows a send completion screen. When the portable terminal 1 is closed in the state in Portion (A) of FIG 5, the screen of the portable terminal 1 changes to the state in Portion (B) of FIG. 5 (arrow A). When the portable terminal 1 is opened in the state in Portion (B) of FIG. 5, the portable terminal 1 changes the state to the state in Portion (A) of FIG. 5 (arrow B). When the touch panel of the portable terminal I is touched in the state in Portion (B) of FIG. 5, the screen of the portable terminal 1 changes to the state in Portion (C) of FIG. 5 (arrow C). When any operation is not performed for a predetermined time in the state in Portion (B) of FIG. 5, the screen of the portable terminal 1 changes to the state in Portion (D) of FIG. 5 (arrow D). When the portable terminal 1 is opened in the state shown in Portion (C) of FIG. 5, the screen of the portable terminal 1 changes to the state in Portion (A) of FIG. 5 (arrow E). When the operation is not performed for a predetermined time in the state in Portion (C) of FIG. 5, the screen of the portable terminal 1 changes to the state in Portion (D) of FIG. 5 (arrow F). When send is selected in the state in Portion (C) of FIG. 5, the screen of the portable terminal 1 changes to the state in Portion (E) of FIG. 5 (arrow G). When the portable terminal 1 is opened in the state in Portion (D) of FIG. 5, the screen of the portable terminal 1 changes to the state in Portion (A) of FIG. 5 (arrow H).

When the portable terminal 1 activates an e-mail application, the open and close detecting unit 102 determines whether the portable terminal 1 is in the open state (step S1). If determined that the portable terminal 1 is in the close state (step S1: NO), the open and close detecting unit 102 repeats the process in step S1 until the portable terminal 1 becomes the open state.

If the open and close detecting unit 102 determines that the portable terminal 1 is in the open state (step S1: YES), the mail editing unit 104 determines whether a mail document is stored in the non-volatile storage unit 110 or the temporary storage unit 105 (step S2). If determined that a mail document is stored in the non-volatile storage unit 110 (step S2: YES), the mail editing unit 104 reads out the mail document from the non-volatile storage unit 110 and records the mail document in the temporary storage unit 105 (step S3).

If determined that a mail document is not stored in the non-volatile storage unit 110 in step S2 (step S2: NO), or if the mail document is recorded in the temporary storage unit 105 in step S3, the mail editing unit 104 rewrites the mail document stored in the temporary storage unit 105 based on the input signal received from the operation receiving unit 101 (step S4). For example, if an input signal indicating "1" of a numerical keypad is received from the operation receiving unit 101, the mail editing unit 104 adds a character "A" at the end of the mail document stored in the temporary storage unit 105. Moreover, for example, if an input signal indicating "delete" is received from the operation receiving unit 101, the mail editing unit 104 deletes the character at the end of the mail document stored in the temporary storage unit 105. At this time, an edit screen of the mail document as shown in Portion (A) of FIG. 5 is displayed on the touch panel 11.

Subsequently, the open and close detecting unit 102 determines whether the portable terminal 1 has shifted to the close state (step S5). If the open and close detecting unit 102 determines that the portable terminal 1 is still in the open state (step S5: NO), the process returns to step S4, and the mail editing unit 104 continuously rewrites the mail document. If the open and close detecting unit 102 determines that the portable terminal 1 has shifted to the close state (step S5: YES), the timing unit 109 starts timing of the elapsed time since the time when the portable terminal 1 has shifted to the close state (step S6). Moreover the preview generating unit 106 outputs a generation instruction of a preview screen of the mail document stored in the temporary storage unit 105 to the display control unit 107. Upon reception of the generation instruction of the preview screen from the preview generating unit 106, the display control unit 107 reads out the mail document stored in the temporary storage unit 105, generates a preview screen of the mail document, and outputs the preview screen to the touch panel control unit 103 (step S7). Accordingly, the preview screen of the mail document as shown in Portion (B) of FIG. 5 is displayed on the touch panel 11.

After having the touch panel 11 display the preview screen of the mail document, the touch panel control unit 103 determines whether the user has touched the touch panel 11 (step S8). If the touch panel control unit 103 determines that the user has not touched the touch panel 11 (step S8: NO), the open and close detecting unit 102 determines whether the portable terminal 1 has shifted to the open state again (step S9). If the open and close detecting unit 102 determines that the portable terminal 1 has shifted to the open state (step S9: YES), the process returns to step S4, and the mail editing unit 104 rewrites the mail document stored in the temporary storage unit 105. If the open and close detecting unit 102 determines that the portable terminal 1 is still in the close state (step S9: NO), the timing unit 109 determines whether the elapsed time since the time of starting timing has reached a predetermined time (for example, three minutes) (step S 10). If the timing unit 109 determines that the elapsed time has not reached the predetermined time (step S10: NO), the process returns to step S8, and the touch panel control unit 103 determines whether the user has touched the touch panel 11.

If determined that the elapsed time has reached the predetermined time (step S10: YES), the timing unit 109 finishes timing of the elapsed time. Then the recording unit 111 records the mail document stored in the temporary storage unit 105 in the non-volatile storage unit 110 (step S11), and deletes the mail document stored in the temporary storage unit 105. The process then returns to step S1, and the portable terminal 1 waits until the user opens the portable terminal 1. That is, when the predetermined time has passed without receiving selection by the selection unit 108, the recording unit 111 records the mail document stored in the temporary storage unit 105 in the non-volatile storage unit 110. Accordingly, the portable terminal 1 displays the standby screen as shown in Portion (D) of FIG. 5 on the touch panel 11, and can shift to a power saving state such as the standby state. Therefore, the portable terminal 1 can reduce power consumption of the portable terminal 1 when the user interrupts editing of the mail document. Moreover since the mail document is recorded in the non-volatile storage unit 110, the portable terminal 1 reads the mail document in step S3. Therefore, the user can edit the mail document from the state before the interruption of creation of the mail document, at the time of the next activation.

In step S8, if the touch panel control unit 103 determines that the user has touched the touch panel 11 (step S8: YES), the selection unit 108 outputs a generation instruction of a selection screen to the display control unit 107. Upon reception of the generation instruction of the selection screen from the selection unit 108, the display control unit 107 generates a selection screen showing options of the process with respect to the generated mail document, and outputs the selection screen to the touch panel control unit 103 (step S12). Accordingly, the selection screen as shown in Portion (C) of FIG. 5 is displayed on the touch panel 11. A "send" button, a "save" button, and a "delete" button are arranged on the selection screen. That is, the selection unit 108 receives a selection of whether to send the mail document, record the mail document in the non-volatile storage unit 110, or delete the mail document without saving it.

When the selection screen has been displayed on the touch panel 11, the touch panel control unit 103 determines whether the user has touched the touch panel 11 (step S 13). If the touch panel control unit 103 determines that the user has not touched the touch panel 11 (step S 13: NO), the open and close detecting unit 102 determines whether the portable terminal 1 has shifted to the open state again (step S14). If the open and close detecting unit 102 determines that the portable terminal 1 has shifted to the open state (step S14: YES), the process returns to step S4, and the mail editing unit 104 rewrites the mail document stored in the temporary storage unit 105. If the open and close detecting unit 102 determines that the portable terminal 1 is still in the close state (step S14: NO), the timing unit 109 determines whether the elapsed time since the time of starting timing has reached the predetermined time (step S 15). If the timing unit 109 determines that the elapsed time has not reached the predetermined time (step S 15: NO), the process returns to step S 13, and it is determined that whether the user has touched the touch panel 11. If determined that the elapsed time has reached the predetermined time (step S15: YES), the timing unit 109 finishes timing of the elapsed time. The recording unit 111 then records the mail document stored in the temporary storage unit 105 in the non-volatile storage unit 110 (step S16) and deletes the mail document stored in the temporary storage unit 105, and the process returns to step S 1.

In step S 13, if the touch panel control unit 103 determines that the user has touched the touch panel 11 (step S 13: YES), the selection unit 108 determines which one of the button areas of the "send" button, the "save" button, and the "delete" button the coordinate at which the touch panel control unit 103 has detected contact is included in (step S 17).

If the selection unit 108 determines that the coordinate at which the touch panel control unit 103 has detected contact is included in the "send" button area (step S 17: send), the transmission unit 112 sends the mail document stored in the temporary storage unit 105 to a destination indicated by the mail document (step S 18), and deletes the mail document stored in the temporary storage unit 105 to finish the process. At this time, the send completion screen of the mail document as shown in Portion (E) of FIG 5 is displayed on the touch panel 11.

If the selection unit 108 determines that the coordinate at which the touch panel control unit 103 has detected contact is included in the "save" button area (step S 17: save), the recording unit 111 records the mail document stored in the temporary storage unit 105 in the non-volatile storage unit 110 (step S 19), and deletes the mail document stored in the temporary storage unit 105 to finish the process.

If the selection unit 108 determines that the coordinate at which the touch panel control unit 103 has detected contact is included in the "delete" button area (step S 17: delete), the recording unit 111 deletes the mail document stored in the temporary storage unit 105 to finish the process.

If the selection unit 108 determines that the coordinate at which the touch panel control unit 103 has detected contact is not included in any area of the "send" button area, the "save" button area, and the "delete" button area (step S 17: others), the process returns to step S 14, to be determined whether the touch panel 11 has been touched.

As described above, according to the present exemplary embodiment, while the open and close detecting unit 102 is detecting that the opening and closing portion is open, the mail editing unit 104 performs the editing process of the mal document (first process). When the open and close detecting unit 102 detects that the opening and closing portion is closed, the preview generating unit 106 outputs, to the display control unit 107, a generation instruction of the preview screen, which is a process with respect to an execution result of the first process, that is, the mail document recorded in the temporary storage unit 105 by the mail editing unit 104 (second process). Accordingly, the user can finish the editing process of the mail document by closing the opening and closing portion without performing the operation of the touch panel 11 or the operating unit 21.

Moreover according to the present exemplary embodiment, after the preview generating unit 106 outputs the generation instruction of the preview screen (second process), the selection unit 108 receives from the user an execution result of the second process, that is, selection of which process of send, save, or delete which is the process with respect to the mail document displayed on the preview screen being executed (third process). The transmission unit 112 or the recording unit 111 then executes the selected process received by the selection unit 108. Accordingly, the user can select the process with respect to the mail document displayed on the preview screen after seeing the preview screen.

Moreover according to the present exemplary embodiment, after the open and close detecting unit 102 has detected that the opening and closing portion is closed, when the predetermined time has passed without receiving selection by the selection unit 108, the recording unit 111 records the mail document in the non-volatile storage unit 110 (fourth process). Accordingly, when the user closes the portable terminal 1 to interrupt editing of the mail document, the portable terminal 1 can read out the mail document being edited at the time of the next activation. Therefore, when using the portable terminal 1 the next time, the user can recall that the mail document is being edited, and can restart editing of the mail document immediately.

In the present exemplary embodiment, a case in which the mail document is previewed as the second process has been described. However, the second process is not limited thereto. For example, the mail document may be sent as the second process. That is, in the present exemplary embodiment, a case in which selection of send, save, and delete is performed, and the selected process is performed after the mail document is previewed has been described. Instead of this process, the send process may be performed without performing selection of send, save, and delete, after the mail document is previewed. Moreover, the mail document can be sent without performing selection of send, save, and delete after the mail document is previewed.

### (Second Exemplary Embodiment)

Next is a detailed description of a second exemplary embodiment of the present invention, with reference to the drawings. In the first exemplary embodiment, a case in which the portable terminal 1 generates a mail document has been described. In the second exemplary embodiment, a case in which the portable terminal 1 takes a picture of an image will be described.

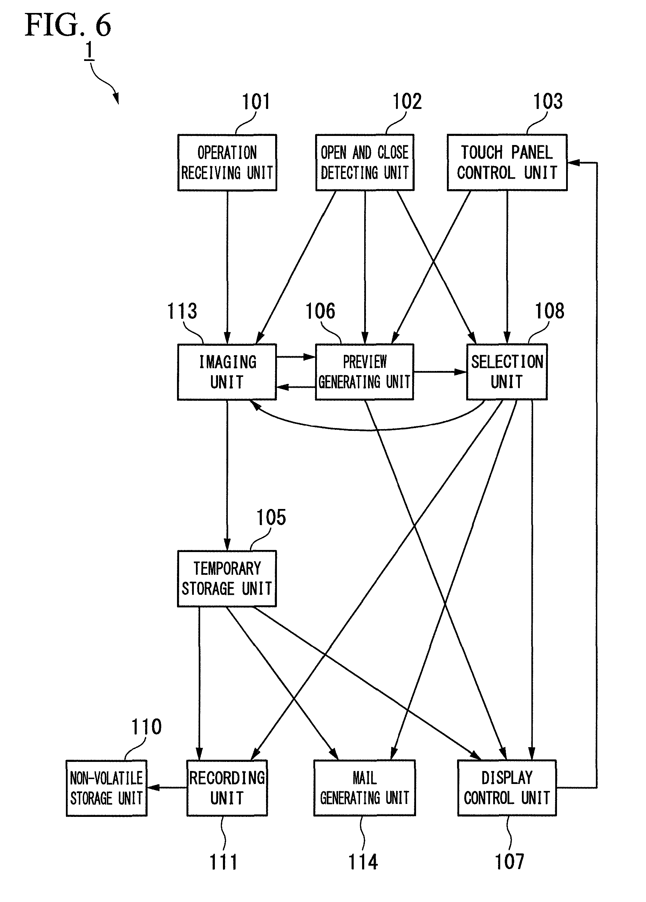

FIG. 6 is a schematic block diagram showing the configuration of the portable terminal 1 according to the second exemplary embodiment of the present invention.

The portable terminal 1 according to the second exemplary embodiment includes an imaging unit 113 (first processing unit) instead of the mail editing unit 104 in the first exemplary embodiment. Moreover the portable terminal 1 includes a mail generating unit 114 (third processing unit) instead of the transmission unit 112. The portable terminal 1 according to the second exemplary embodiment does not include the timing unit 109.

The operation receiving unit 101 receives an input from a user with respect to the operating unit 21 provided in the first case 10, and generates an input signal corresponding to the input.

The open and close detecting unit 102 determines whether the opening and closing portion is in the open state or in the close state.

The touch panel control unit 103 receives a touch input on the touch panel 11, and generates an input signal corresponding to the input. The touch panel control unit 103 also displays the display information on the touch panel 11.

When the portable terminal 1 is in the open state, the imaging unit 113 receives the input signal from the operation receiving unit 101, and takes a picture, triggered by the input signal.

The temporary storage unit 105 is a volatile memory, and stores a picture image taken by the imaging unit 113.

When the portable terminal 1 has shifted from the open state to the close state, the preview generating unit 106 instructs the display control unit 107 to generate a preview screen of the picture image stored in the temporary storage unit 105 (second process).

Upon reception of the generation instruction of the preview screen from the preview generating unit 106, the display control unit 107 generates a preview screen from the picture image stored in the temporary storage unit 105, and outputs the preview screen to the touch panel control unit 103. Moreover, when a generation instruction of a selection screen is received from the selection unit 108, the display control unit 107 generates a selection screen, and outputs the selection screen to the touch panel control unit 103.

When the touch panel control unit 103 receives an input while the preview screen is being displayed on the touch panel 11, the selection unit 108 receives a selection of whether to save the picture image, attach the picture image to the mail, or delete the picture image from the user.

The non-volatile storage unit 110 saves the picture image taken by the imaging unit 113 in a non-volatile manner.

The recording unit 111 records the picture image stored in the temporary storage unit 105 in the non-volatile storage unit 110 according to an instruction of the selection unit 108 (third process).

The mail generating unit 114 adds the picture image stored in the temporary storage unit 105 to a mail document according to an instruction of the selection unit 108 (third process).

Next is a description of the operation of the portable terminal 1.

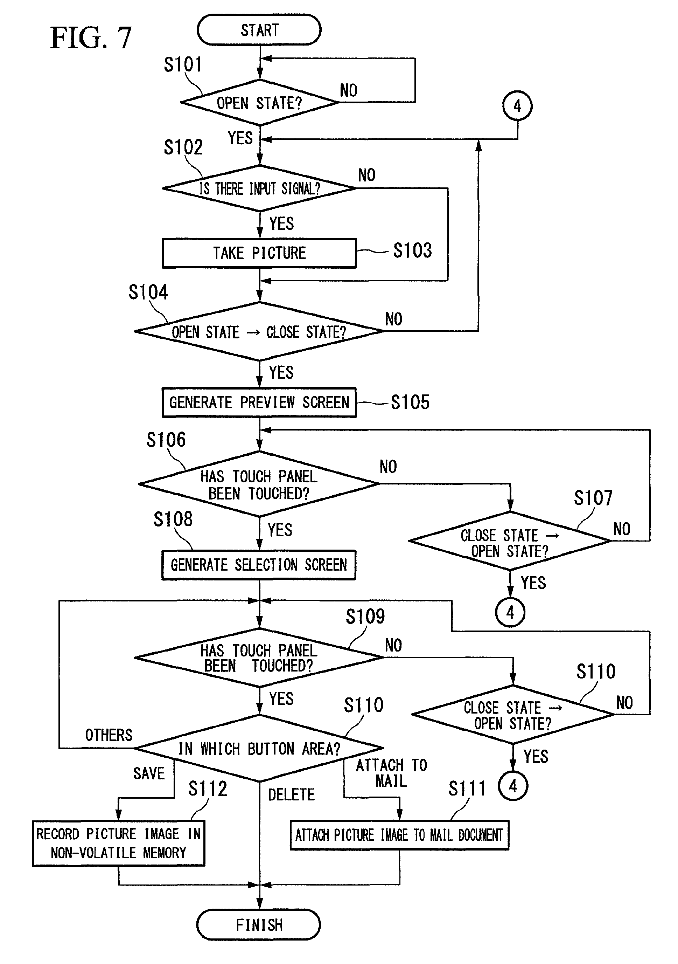

FIG. 7 is a flowchart showing the operation of the portable terminal 1 according to the second exemplary embodiment of the present invention.

When the portable terminal 1 activates a camera application, the open and close detecting unit 102 determines whether the portable terminal 1 is in the open state (step S 101). If the open and close detecting unit 102 determines that the portable terminal 1 is in the close state (step S 101: NO), it repeats the process in step S101 until the portable terminal 1 is opened.

If the open and close detecting unit 102 determines that the portable terminal 1 is in the open state (step S101: YES), the imaging unit 113 determines whether an input signal from the operation receiving unit 101 has been received (step S102). If determined that the input signal has been received (step S102: YES), the imaging unit 113 takes a picture, and records a taken picture image in the temporary storage unit 105 (step S103).

If the imaging unit 113 determines that the input signal has not been received in step S102 (step S102: NO), or if the imaging unit 113 has taken a picture in step S103, the open and close detecting unit 102 determines whether the portable terminal 1 has shifted to the close state (step S104). If the open and close detecting unit 102 determines that the portable terminal 1 is still in the open state (step S 104: NO), the process returns to step S102, to receive an input signal continuously. If the open and close detecting unit 102 determines that the portable terminal has shifted to the close state (step S104: YES), the preview generating unit 106 outputs a generation instruction of the preview screen of the picture image stored in the temporary storage unit 105 to the display control unit 107. Upon reception of the generation instruction of the preview screen from the preview generating unit 106, the display control unit 107 reads out the picture image stored in the temporary storage unit 105, generates a preview screen of the picture image, and outputs the preview screen to the touch panel control unit 103 (step S105). By this process, the preview screen of the picture image is displayed on the touch panel 11.

After having the touch panel 11 display the preview screen of the picture image, the touch panel control unit 103 determines whether the user has touched the touch panel 11 (step S106). If the touch panel control unit 103 determines that the user has not touched the touch panel 11 (step S106: NO), the open and close detecting unit 102 determines whether the portable terminal 1 has shifted to the open state again (step S107). If the open and close detecting unit 102 determines that the portable terminal 1 has shifted to the open state (step S107: YES), the temporary storage unit 105 deletes the picture image stored therein, and the process returns to step S 102 to receive an input signal. If the open and close detecting unit 102 determines that the portable terminal 1 is still in the close state (step S107: NO), the process returns to step S106, and the touch panel control unit 103 determines whether the touch panel 11 has been touched.

In step S106, if the touch panel control unit 103 determines that the user has touched the touch panel 11 (step S106: YES), the selection unit 108 outputs a generation instruction of the selection screen to the display control unit 107. Upon reception of the generation instruction of the selection screen from the selection unit 108, the display control unit 107 generates the selection screen showing options of the process with respect to the taken picture image, and outputs the selection screen to the touch panel control unit 103 (step S108). By this process, the selection screen is displayed on the touch panel 11. On the selection screen, a "save" button, an "attach to mail" button, and a "delete" button are arranged. That is, the selection unit 108 receives a selection of whether to record the taken picture image in the non-volatile storage unit 110, attach the taken picture image to a mail document, or delete the taken picture image without saving the picture image.

After having the touch panel 11 display the selection screen , the touch panel control unit 103 determines whether the user has touched the touch panel 11 (step S109). If the touch panel control unit 103 determines that the user has not touched the touch panel 11 (step S 109: NO), the open and close detecting unit 102 determines whether the portable terminal 1 has shifted to the open state again (step S110). If the open and close detecting unit 102 determines that the portable terminal 1 has shifted to the open state (step S110: YES), the process returns to step S102, and the operation receiving unit 101 receives an input signal. If the open and close detecting unit 102 determines that the portable terminal 1 is still in the open state (step S110: NO), the process returns to step S109, and the touch panel control unit 103 determines whether the touch panel 11 has been touched.

In step S109, if the touch panel control unit 103 determines that the user has touched the touch panel 11 (step S109: YES), the selection unit 108 determines which one of the button areas of the "save" button, the "attach to mail" button, and the "delete" button the coordinate at which the touch panel control unit 103 has detected contact is included in (step S110).

If the selection unit 108 determines that the coordinate at which the touch panel control unit 103 has detected contact is included in the "attach to mail" button area (step S110: attach to mail), the transmission unit 112 attaches the picture image stored in the temporary storage unit 105 to a mail document and sends the mail document attached with the picture image to the mail application (step S111) to finish the process.

If the selection unit 108 determines that the coordinate at which the touch panel control unit 103 has detected contact is included in the "save" button area (step S 110: save), the recording unit 111 records the picture image stored in the temporary storage unit 105 in the non-volatile storage unit 110 (step S 112), and deletes the picture image stored in the temporary storage unit 105 to finish the process.

If the selection unit 108 determines that the coordinate at which the touch panel control unit 103 has detected contact is included in the "delete" button area (step S110: delete), the recording unit 111 deletes the picture image stored in the temporary storage unit 105 to finish the process.

If the selection unit 108 determines that the coordinate at which the touch panel control unit 103 has detected contact is not included in any area of the "send" button area, the "save" button area, and the "delete" button area (step S110: others), the process returns to step S109, to be determined whether the touch panel 11 has been touched.

In this manner, not only at the time of generating a mail document but also at the time of taking picture, the exemplary embodiment of the present invention can be applied.

In the present exemplary embodiment, a case in which any process of saving the picture image, attaching the picture image to the mail document, and deleting the picture image is executed after displaying the preview screen has been described. However, it is not limited thereto. As a process other than "save", "attach to mail", and "delete", for example, upload to a server device, transfer to another device by infrared communication or the like, and when the taken picture image is video image, reproduction of the video image can be mentioned.

Next is a detailed description of a third exemplary embodiment of the present invention, with reference to the drawings. In the first exemplary embodiment, a case in which the portable terminal 1 generates a mail document has been described. In the third exemplary embodiment, a case in which the portable terminal 1 performs voice communication will be described.

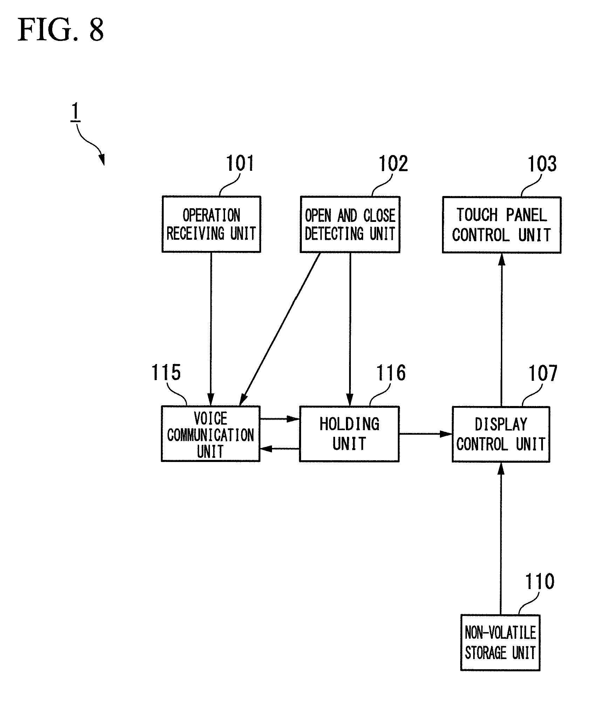

FIG. 8 is a schematic block diagram showing the configuration of the portable terminal 1 according to the third exemplary embodiment of the present invention.

The portable terminal 1 according to the third exemplary embodiment includes the operation receiving unit 101, the open and close detecting unit 102, the touch panel control unit 103, a voice communication unit 115 (first processing unit), a holding unit 116 (second processing unit), the display control unit 107, and the non-volatile storage unit 110.

The operation receiving unit 101 receives an input from the user with respect to the operating unit 21 provided in the first case 10, and generates an input signal corresponding to the input.

The open and close detecting unit 102 determines whether the opening and closing portion is in the open state or in the close state.

The touch panel control unit 103 receives a touch input on the touch panel 11, and generates an input signal corresponding to the input. Moreover, the touch panel control unit 103 displays display information on the touch panel 11.

The voice communication unit 115 receives an input signal from the operation receiving unit 101 when the portable terminal 1 is the open state, and performs voice communication (first process) based on the input signal.

The holding unit 116 holds the voice communication by the voice communication unit 115 (second process), when the portable terminal 1 has shifted from the open state to the close state.

If the holding unit 116 holds the voice communication, the display control unit 107 reads out an image of a communication partner stored in the non-volatile storage unit 110, and outputs a screen including the image to the touch panel control unit 103.

The non-volatile storage unit 110 stores a photograph of the owner of a terminal specified by a telephone number, associated with the telephone number.

Next is a description of the operation of the portable terminal 1.

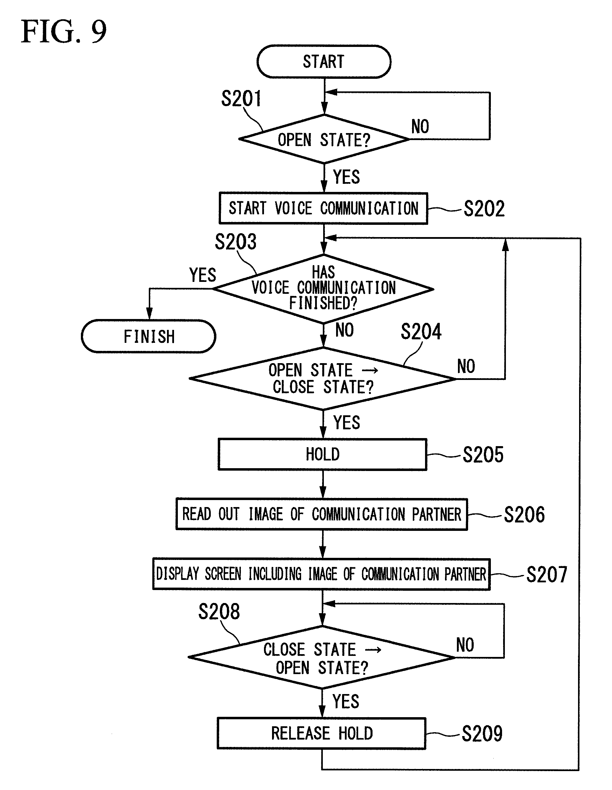

FIG. 9 is a flowchart showing the operation of the portable terminal 1 according to the third exemplary embodiment of the present invention.

When the portable terminal 1 activates a communication application, the open and close detecting unit 102 determines whether the portable terminal 1 is in the open state (step S201). If the open and close detecting unit 102 determines that the portable terminal 1 is in the close state (step S201: NO), the open and close detecting unit 102 repeats the process in step S201 until the portable terminal 1 becomes the open state.

If the open and close detecting unit 102 determines that the portable terminal 1 is in the open state (step S201: YES), the voice communication unit 115 makes a call according to the input signal received from the operation receiving unit 101 to start voice communication (step S202). Subsequently, the voice communication unit 115 determines whether an input signal indicating termination of the voice communication has been received from the operation receiving unit 101 (step S203). If the voice communication unit 115 determines that the input signal indicating termination of the voice communication has not been received (step S203: NO), the open and close detecting unit 102 determines whether the portable terminal 1 has shifted to the close state (step S204). If the open and close detecting unit 102 determines that the portable terminal 1 is still in the open state (step S204: NO), the process returns to step S203, and the voice communication unit 115 continues determination of whether an input signal indicating termination of the voice communication has been received. If the open and close detecting unit 102 determines that the portable terminal 1 has shifted to the close state (step S204: YES), the holding unit 116 holds the voice communication by the voice communication unit 115 (step S205). Subsequently, the display control unit 107 reads out the image associated with the telephone number of the present communication partner (step S206). The display control unit 107 then generates a screen including the readout image and outputs the screen to the touch panel control unit 103 (step S207). By this process, the screen including the image of the communication partner is displayed on the touch panel 11, and the information associated with the communication partner can be easily confirmed.

After the touch panel control unit 103 has the touch panel 11 display the screen including the image of the communication partner, the open and close detecting unit 102 determines whether the portable terminal 1 has shifted to the open state again (step S208). If determined that the portable terminal 1 is still in the close state (step S208: NO), the open and close detecting unit 102 continues determination of whether the portable terminal 1 has shifted from the close state to the open state. If the open and close detecting unit 102 determines that the portable terminal 1 has shifted to the open state (step S208: YES), the holding unit 116 releases hold of the voice communication (step S209). The process then returns to step S203, where the voice communication unit 115 determines whether an input signal indicating termination of the voice communication has been received.

In step S203, if the voice communication unit 115 determines that the input signal indicating termination of the voice communication has been received (step S203: YES), the voice communication unit 115 finishes the process.

In this manner, not only at the time of generating a mail document, but also at the time of voice communication, the exemplary embodiment of the present invention can be applied.

In the present exemplary embodiment, a case in which the voice communication is held when the portable terminal 1 is closed has been described. However, it is not limited thereto. There may be a case in which other processes associated with voice communication are performed, such as the interruption of voice transfer, the interruption of image transfer in a videophone, or a termination process of the voice communication.

There may be a case of performing processes in which the content of the voice communication is decoded by voice recognition during voice communication, the content is sent to a scheduler application or an address book application, and the registered content is displayed when the portable terminal 1 is closed so that the user confirms the content. Accordingly, information regarding the communication content can be easily registered.

The exemplary embodiments of the present invention have been described above in detail. However the specific configuration is not limited to that described above. Various design changes can be made without departing from the scope of the present invention.

The above-described portable terminal 1 has a computer system incorporated therein. The operations of the respective processing units described above are stored in a computer readable recording medium in the form of a program, and the processes described above are performed by reading and executing the program by the computer. The computer readable recording medium refers to magnetic disk, magneto-optical disk, CD-ROM, DVD-ROM, semiconductor memory, and the like. The computer program may be delivered to a computer by a communication line, and the computer having received this delivery may execute the program.

The program may realize a part of the functions described above.

It may be a so-called differential file (differential program) that can realize the functions described above by a combination with a program already recorded in the computer system.

This application is based upon and claims the benefit of priority from Japanese patent application No. 2011-129926 filed on June 10, 2011, the disclosure of which is incorporated herein in its entirety by reference.

### INDUSTRIAL APPLICABILITY

The present invention may be applied to a portable terminal, a control method, and a program. The portable terminal, the control method, and the program applied with the present invention can execute a process with respect to an execution result of a previous process in conjunction with opening and closing.

### Reference Symbols

- 10: First case
- 11: Touch panel
- 20: Second case
- 21: Operating unit
- 101: Operation receiving unit
- 102: Open and close detecting unit
- 103: Touch panel control unit
- 104: Mail editing unit
- 105: Temporary storage unit
- 106: Preview generating unit
- 107: Display control unit
- 108: Selection unit
- 109: Timing unit
- 110: Non-volatile storage unit
- 111: Recording unit
- 112: Transmission unit
- 113: Imaging unit
- 114: Mail generating unit
- 115: Voice communication unit
- 116: Holding unit

## Claims

1. A portable terminal comprising:
an opening and closing portion that opens and closes;
an open and close detecting unit that detects open and close of the opening and closing portion;
a first processing unit that executes a first process while the open and close detecting unit is detecting that the opening and closing portion is open; and
a second processing unit that executes a second process when the open and close detecting unit detects that the opening and closing portion has been closed, the second process being a process with respect to an execution result of the first process.

2. The portable terminal according to claim 1, further comprising:
a selection unit that receives from a user a selection of which of third processes is to be executed after the second processing unit executes the second process, the third processes being a plurality of processes with respect to an execution result of the second process; and
a third processing unit that executes a process of the third processes, for which the selection unit has received selection.

3. The portable terminal according to claim 2, further comprising:
a fourth processing unit that executes a fourth process after predetermined time has passed without receiving selection by the selection unit since the open and close detecting unit has detected that the opening and closing portion is closed.

4. The portable terminal according to any one of claim 1 through claim 3, further comprising:
a display unit that displays an execution result of the second process when the second processing unit has executed the second process.

5. A control method for a portable terminal comprising an opening and closing portion that opens and closes, the method comprising:
detecting open and close of the opening and closing portion;
executing a first process while the opening and closing portion is open is being detected; and
executing a second process when the opening and closing portion has been closed is detected, the second process being a process with respect to an execution result of the first process.

6. A program for causing a portable terminal comprising an opening and closing portion that opens and closes to function as:
an open and close detecting unit that detects open and close of the opening and closing portion;
a first processing unit that executes a first process while the open and close detecting unit is detecting that the opening and closing portion is open; and
a second processing unit that executes a second process when the open and close detecting unit detects that the opening and closing portion has been closed, the second process being a process with respect to an execution result of the first process.
